# EUROPÄISCHE PATENTSCHRIFT

(11) **EP 2 169 397 B1**
(45) Veröffentlichungstag und Bekanntmachung des Hinweises auf die Patenterteilung: **05.11.2014**
(21) Anmeldenummer: 09012350.6
(22) Anmeldetag: 29.09.2009
(51) Int. Cl.: G01N 29/07, G01N 29/24, G01N 29/44

(54) **Verfahren zur Qualitätsprüfung von Klebeverbindungen**
Method for testing the quality of adhesive joints
Procédé de contrôle de la qualité d'assemblages collés

(30) Priorität: 29.09.2008 DE 102008049394; 30.01.2009 DE 102009006905
(43) Veröffentlichungstag der Anmeldung: 31.03.2010
(73) Patentinhaber: Fraunhofer-Gesellschaft zur Förderung der angewandten Forschung e.V., 80686 München (DE)
(72) Erfinder: Dobmann, Gerd, 66125 Saarbrücken (DE); Niese, Frank, 66125 Saarbrücken (DE)
(74) Vertreter: Rösler, Uwe

(56) Entgegenhaltungen:
- EP-A2- 1 343 005
- US-A- 3 564 903
- US-A- 6 109 108
- ALLIN J M ET AL: "Adhesive disbond detection of automotive components using first mode ultrasonic resonance", NDT & E INTERNATIONAL, BUTTERWORTH-HEINEMANN, OXFORD, GB, Bd. 36, Nr. 7, 1. Oktober 2003 (2003-10-01), Seiten 503-514, XP004441817, ISSN: 0963-8695, DOI: 10.1016/S0963-8695(03)00045-8
- ADAMS R D ET AL: "Nondestructive testing of adhesively-bonded joints", NDT & E INTERNATIONAL, BUTTERWORTH-HEINEMANN, OXFORD, GB, Bd. 30, Nr. 2, 1. April 1997 (1997-04-01), Seiten 93-98, XP004292020, ISSN: 0963-8695, DOI: 10.1016/S0963-8695(96)00050-3

## Beschreibung

### Technisches Gebiet

Die Erfindung bezieht sich auf ein Verfahren zur Qualitätsprüfung wenigstens einer Klebverbindung, die in Form einer Haftvermittlerschicht in einem Schichtverbund zwischen wenigstens zwei flächig ausgebildeten Fügepartnern, von denen wenigstens ein Fügepartner ferromagnetische Materialanteile enthält, eingebracht ist, bei dem Ultraschallwellen über die Oberfläche eines Fügepartners in den Schichtverbund eingekoppelt, an der Haftvermittlerschicht sowie an der der Haftvermittlerschicht abgewandten Oberfläche des anderen Fügepartners wenigstens zum Teil zurückgestreut werden und die zurückgestreuten Ultraschallwellenanteile in Form von Ultraschallsignale detektiert und die dabei gewonnenen Ultraschallsignale der Qualitätsprüfung zugrundegelegt werden.

### Stand der Technik

Im Automobilbau werden heutzutage hauptsächlich Stahlwerkstoffe verbaut, die zunehmend auch verklebt werden. Das Kleben bietet dabei mehrere Vorteile, zum einen können damit komplexe Strukturen mit eingeschränkter Zugänglichkeit dauerhaft verbunden werden, zum anderen ist es auch möglich, unterschiedliche Werkstoffe miteinander zu kombinieren, bei denen herkömmliche Fügeverfahren, wie bspw. Schweissverfahren oder das Herstellen von Form- und/oder Kraftschlussverbindungen, versagen. Damit eröffnen sich neue Möglichkeiten für einen effektiven Leichtbau mit reduziertem Materialeinsatz bei gleicher oder sogar verbesserter Komponenten- oder Strukturfestigkeit. Mit dem Einsatz von auf adhäsiven Klebstoffverbindungen beruhenden Fügeverbunden zwischen einzelnen Komponenten lassen sich bei der Herstellung derartiger Verbundstrukturen Rohstoffe einsparen. Zudem sind gegenüber koventionellen Fügeverfahren gewichtsreduziertere Verbundstrukturen realisierbar, die insbesondere im Automobil-, Flugzeug-, Zug- und Schiffsbau aufgrund beträchtlicher Gewichtseinsparungen letztlich auch zu Treibstoff- bzw. Stromeinsparungen beitragen. Damit lassen sich die Umweltbilanz für das Transportwesen im Allgemeinen sowie auch die Wettbewerbsfähigkeit derartiger Produkte deutlich verbessern.

Während die herkömmlichen Fügeverfahren eine hohe Prozesssicherheit besitzen und diesbezügliche Verbindungen mit klassischen Methoden der zerstörungsfreien Prüfung, kurz ZFP-Verfahren, weitgehend zuverlässig prüfbar sind, gibt es zur Zeit für Klebeverbindungen keine allgemeine zuverlässige Prüfmethode.

Zur Qualitätssicherung ist es aber unabdingbar zumindest Stichprobenüberprüfung der Nähte durchzuführen. Im Gegensatz zum Flugzeugbau, bei dem schon seit Jahrzehnten Klebeverbindungen an der Tagesordnung sind, sind die Klebstoffdicken im Fahrzeugbau meist erheblich dicker und reichen bis in den Millimeterbereich hinein, so dass die etablierten Prüftechniken aus den Flugzeugbau zur Klebenahtkontrolle nicht oder nur sehr eingeschränkt genutzt werden können.

Eine anerkannte Technik zur zerstörungsfreien Untersuchung von Klebeverbindungen sind so genannte Ultraschallresonanzverfahren, bei denen in den Schichtverbund über eine Koppeloberfläche Ultraschallwellen eingekoppelt werden, von denen innerhalb des Schichtverbundes reflektierte Ultraschallwellenanteile zumeist am Ort der Einkopplung detektiert und nachfolgend ausgewertet werden. Dabei wird die Erregerfrequenz für die Einschallung von Ultraschallwellen in den Schichtverbund gerade so gewählt, dass sich innerhalb des Schichtverbundes eine Dickenresonanz ausbildet. Meist wird hierbei der niedrigste Schwingungsmode der Dickenresonanz im Schichtverbund, bestehend aus Fügepartner/Klebeschicht/Fügepartner, gezielt angeregt und ausgewertet. Vergleicht man die gemessene Resonanzfrequenz mit einem Referenzwert, der vorab an einer Referenzprobe aufgenommen worden ist, und stellt beim Vergleich Abweichungen auf, so kann eine festgestellte Verschiebung der Resonanzfrequenz mit dem Zustand der Klebenaht bzw. Klebeschicht korreliert werden, zumal davon auszugehen ist, dass die aus Metall, vorzugsweise aus Stahl gefertigten Fügepartner weit weniger oder überhaupt nicht im Vergleich zur verfestigten Klebstoffschicht einer Veränderung im Sinne einer Degradation unterliegen. Der vorstehende Ansatz wird in kommerziellen Geräten zur Klebenahtprüfung eingesetzt und angewendet und ist im Flugzeugbau anerkannt, zumal dort typische Klebstoffschichtdicken Zehntelmillimeter und darunter messen.

Ultraschallresonanzverfahren zur Untersuchung Haftvermittelnder Klebstoffschichten für den Zusammenhalt wenigstens zweier Fügepartner sind in den nachfolgenden Artikeln beschrieben: Allin, J.M., Cawley, P., Lowe, M.J.S, "Adhesive disbond detection of automotive components using first mode ultrasonic resonance", NDT&E international 36 (2003), S. 503-514; Stepinski, T., Jonsson, M., "Narrowband ultrasonic spectroscopy for NDE of layered structures", Insight 47 (2005) S. 220-224; Maeva, E.Y., Severina, I.A., O'Neill, B., Severin, F.M., Maev, R.G., "Some Approaches of ultrasonic evaluation of metal sheets adhesive bonds", Review of Quantitative Nondestructive Evaluation, Vol. 23, ed. by D.O. Thompson and D. E. Chimenti (2004), S. 937-943; Robinson, A.M., Drinkwater, B.W., Allin, J., "Dry-coupled low-frequency ultrasonic wheel probes application to adhesive bond inspection", NDT&E international 36 (2003), S. 27-36.

Neben der Dickenresonanzmesstechnik können auch Resonanzen in Form von geführten Wellenmoden, wie Lambwellen oder geführten SH-Wellen, d.h. horizontal geführte Scherwellen, genutzt werden. In dem Artikel von Weitzenböck, J.R., Niese, F., Hübschen, G., "Non-destructive evaluation and inspection of adhesively bonded aluminium Joints", 71 International Conference on Adhesion and Adhesives 1999, S. 93-98, Cambridge, UK, 1999, sind hierzu entsprechende Ausführungen zu entnehmen. Mit Nachteilen ist jedoch die Nutzung von piezoelektrischen Ultraschallwandlern verbunden. Zum einen ist ein Koppelmittel nötig, um die Ultraschallsignale vom Prüfkopf in die zu untersuchende Komponente ein- und auszukoppeln. Das Koppelmittel selbst und die Koppelspaltdicke beeinflussen darüber hinaus die Ultraschallsignale und somit auch die Aussagequalität über die Klebenahtverbindung. Zwar gibt es Ansätze die Ultraschallsignale "trocken", bspw. über weiche Gummischichten in den Schichtverbund ein- und auszukoppeln, dennoch werden die Frequenzen der sich ausbildenden Dickenresonanzen durch den mechanischen Kontakt zwischen Koppelmittel und Prüfkopf beeinflusst. Zum anderen ist man auf die Erzeugung longitudinal polarisierter Ultraschallwellen eingeschränkt.

Eine Alternative hierzu ergibt sich aus der Nutzung elektromagnetischer Ultraschallwandlern (EMUS). Bei dieser Technik können Ultraschallsignale direkt in den oberflächennahen Schichten einer Komponente ohne Koppelmittel und berührungsfrei über elektromagnetische Wechselwirkung angeregt und abgegriffen werden. In ferromagnetischen Werkstoffen beruht die Anregung hauptsächlich auf dem Effekt der Magnetostriktion, in nichtmagnetischen, elektrisch leitenden Werkstoffen wirkt dagegen die Lorenzkraft als Anregungsmechanismus.

Aus US 3,564,903 A ist eine Vorrichtung zur Detektion von Fehlern in einem Verbundsystem offenbart, wobei insbesondere ein Verbundsystem aus einem honigwabenartigen Kern, der beidseitig mit jeweils einer Außenhautschicht verbunden ist, untersucht wird. Als Fehler werden fehlende Verbindungen zwischen Außenhaut und Kern sowie eine beschädigte oder geschwächte Kernstruktur betrachtet. Zur Untersuchung auf Fehler werden in einer elektrisch leitenden Außenhaut mittels eines elektromagnetischen Wandlers Wirbelströme induziert, die von magnetischen Feldern begleitet sind, welche aufgrund des Lenz-Effektes mit dem anregenden Feld wechselwirken. Hierdurch werden Vibrationskräfte auf den Schichtverbund ausgeübt. Die technische Lehre der US 3, 564, 903 A besteht darin, dass der Schichtverbund zu Vibrationen angeregt wird, deren Frequenz dem Doppelten der Frequenz entspricht, mit dem der Wandler angesteuert wird. In einem Ausführungsbeispiel werden die Vibrationssignale mithilfe eines Mikrofons erfasst und einem Verstärker unter Selektion der doppelten Frequenz zugeführt. Aus an einem Oszilloskop angezeigten Lissajou-Mustern kann auf die Qualität des Verbundsytems rückgeschlossen werden.

Die EP 1 343 005 A2 offenbart ein Verfahren und eine Vorrichtung zur Untersuchung von Beschädigungen in einem Stapel aus leitenden Materialienschichten, die mittels Nieten, Schrauben oder dergleichen miteinander verbunden sind, mit einem EMAT-Wandler. Bei Vorhandensein einer Schädigung (Korrosion, Kriechen, Stress-Korrosions-Riss oder Ermüdung) sinkt die Anzugskraft der Niet- oder Schraubverbindung und die Transmission der Ultraschallwellen von einer oberen zu einer unteren Schicht wird verschlechtert. Aus der Veränderung der Ultraschallgeschwindigkeit und der Dämpfung der empfangenen Ultraschallwellen kann eine Schädigung des Stapels diagnostiziert werden.

### Darstellung der Erfindung

Der Erfindung liegt die Aufgabe zugrunde ein Verfahren zur Qualitätsprüfung wenigstens einer Klebverbindung, die in Form einer Haftvermittlerschicht in einem Schichtverbund zwischen wenigstens zwei flächig ausgebildeten Fügepartnern, von denen wenigstens ein Fügepartner ferromagnetische Materialanteile enthält, eingebracht ist, bei dem Ultraschallwellen über die Oberfläche eines Fügepartners in den Schichtverbund eingekoppelt, an der Haftvermittlerschicht sowie an der der Haftvermittlerschicht abgewandten Oberfläche des anderen Fügepartners wenigstens zum Teil zurückgestreut werden und die zurückgestreuten Ultraschallwellenanteile in Form von Ultraschallsignale detektiert und die dabei gewonnenen Ultraschallsignale der Qualitätsprüfung zugrunde gelegt werden, derart weiterzubilden, dass auch Klebeverbindungen mit Klebeschichtdicken von einem Millimeter und mehr zuverlässig überprüft werden können.

Die Lösung der Aufgabe ist im Anspruch 1 angegeben. Den Erfindungsgedanken in vorteilhafter Weise weiterbildende Merkmale sind Gegenstand der Unteransprüche sowie der weiteren Beschreibung insbesondere unter Bezugnahme auf die illustrierten Ausführungsbeispiele zu entnehmen.

Lösungsgemäß zeichnet sich ein Verfahren zur Qualitätsprüfung wenigstens einer Klebeverbindung mit den im Oberbegriff des Anspruches 1 angegebenen Merkmalen dadurch aus , dass die Einkopplung sowie die Detektion der Ultraschallwellen über den die ferromagnetischen Materialanteile enthaltenden Fügepartner mittels eines EMUS-Wandlers erfolgt, so dass auf den Einsatz jeglicher Koppelmittel und die damit verbundenen, vorstehend erläuterten Nachteile verzichtet werden kann. Die Einkopplung der Ultraschallwellen in den aus der wenigstens einen Haftvermittlerschicht und den wenigstens zwei Fügepartnern bestehenden Schichtverbund wird derart durchgeführt, dass der EMUS-Wandler entweder mit einem breitbandigen Anregungsimpuls oder mit Anregungssignalen, die in der Frequenz durchgestimmt werden, zur Anregung von Dickenresonanzen innerhalb des Schichtverbundes beaufschlagt wird. Zur Qualitätsprüfung wird aus den detektierten Ultraschallsignalen die Phasenlage bestimmt, die mit geeigneten Referenzwerten verglichen wird.

Die lösungsgemäße Auswertung der Phaseninformation der im Resonanzfall detektierten Ultraschallsignale hat den Vorteil einer sehr viel exakteren Erfassung des durchschallten Schichtverbundes und einer damit verbundenen verbesserten Qualitätsbestimmung des Schichtverbundes gegenüber anderen Auswerteverfahren, zumal bei jedem Übergang einer Ultraschallwelle von einer Schicht in die nächste Schicht die Phase der transmittierten Ultraschallwelle je nach Eigenschaft der Zwischenschicht geringfügig verschoben wird. So reagiert die Phase der Ultraschallwelle wesentlich empfindlicher auf eine Änderung in der Fügeverbindung, bspw. bedingt durch Haftungsunterschiede zwischen den Schichten, unterschiedliche Dicken der Schichten usw., als beispielsweise die Amplitude.

Bei geeigneter Kalibrierung, d.h. die Ermittlung von Referenzmesswerten, die an einem Referenzschichtverbund gewonnen wurden, mit denen die an einem zu überprüfenden Schichtverbund gewonnenen Phasenlagen der Ultraschallsignale verglichen und beurteilt werden, ist somit mit einer zuverlässigeren Zustandsaussage zu rechnen.

In einem mehrschichtigen Schichtverbund, vorzugsweise bestehend aus ferromagnetischen Blechen als einzelne Fügepartner und jeweils einer dazwischen liegenden Klebeschicht, kann über EMUS-Wandler im Wege einer magnetostriktiven Ultraschallwellenerzeugung eine Dickenresonanz innerhalb des Schichtverbundes angeregt werden. Dazu wird einem parallel zur Oberfläche des Schichtverbundes ausgerichteten magnetischen Feld mit einer HF-Spule ein elektromagnetisches HF-Feld überlagert. Die Oszillationsfrequenz des HF-Feldes entspricht dabei der Frequenz der anzuregenden Ultraschallwelle. Sowohl die Anregung als auch der Empfang der Ultraschallwelle erfolgen somit koppelmittelfrei und berührungsfrei. Auf diese Weise kann eine Rückwirkung des EMUS-Wandlersystems auf die Resonanzfrequenzen des Schichtverbundes ausgeschlossen werden, wie sie bei der Nutzung von piezoelektrischen Ultraschallwandlern bedingt durch den mechanischen Oberflächenkontakt stets auftritt.

Ferner bietet die koppelmittelfreie Ultraschallwellenanregung und -detektion mit einer horizontalen, das heißt parallel zum flächig ausgeführten, ferromagnetischen Fügepartner orientierten Vormagnetisierung den Vorteil, dass das EMUS-Wandlersystem mit einem gegenüber der Magnetisierungseinheit mechanisch entkoppelten HF-Spulensystem, welches sich in einem sehr geringen Abstand zur Prüfobjektoberfläche, typischerweise kleiner 1 mm, befindet, ausgebildet werden kann. So zieht sich die Magnetisierungseinheit aufgrund der hohen magnetischen Feldstärke stark an das ferromagnetische Prüfobjekt an. Wenn diese hohe Kraft auch das HF- Spulensystem auf die Prüfobjektoberfläche drückt, ist ein zuverlässiger Betrieb der Prüfeinrichtung, besonders bei einer scannenden Bewegung entlang der Fügelinie, nicht möglich, da eine Beschädigung des HF-Spulensystems absehbar ist. Der Betrieb mit einem horizontalen Magnetfeld umgeht diese Problematik durch die mechanische Entkopplung. Das HF-Spulensystem wird vorzugsweise von einer separaten Aufhängung geführt. Sie ist so ausgelegt, dass das HF-Spulensystem nur leicht an die Oberfläche angedrückt wird, so dass es auch bei Bewegung immer an der Oberfläche anliegt. Eine höhere Andruckkraft ist nicht notwendig und würde zudem den Verschleiß erhöhen. Weitere Einzelheiten hierzu können der weiteren Beschreibung, die auf die Erläuterung eines Ausführungsbeispieles bezogen ist, entnommen werden.

Da, wie bereits vorstehend erwähnt, eine Beeinträchtigung der sich ausbildenden Resonanzfrequenz innerhalb des zu untersuchenden Schichtverbundes durch das EMUS-Wandlersystem ausgeschlossen werden kann, kann der durch die Klebeschicht oder Klebenaht herrührende Anteil der sich ausbildenden Dickenresonanzen innerhalb des Schichtverbundes genauer analysiert werden, so dass eine präzisere Zustandsaussage über die Klebeverbindung anhand der im Resonanzfall erhältlichen Phaseninformationen aus den Ultraschallsignale möglich ist als es bei den Resonanzverfahren nach dem Stand der Technik der Fall ist.

Die Bestimmung der Phaseninformation der im Resonanzfall detektierbaren Ultraschallsignale kann grundsätzlich über verschiedene Methoden erfolgen. Für die Analyse der akustischen Resonanz im Schichtverbund bietet sich zum Beispiel eine Fourier-Transformation des Ultraschallempfangssignals an. Reichen hingegen für eine Zustandsaussage eines Schichtverbundes nur ganz bestimmte Frequenzanteile aus, so ist lediglich eine diskrete, frequenzselektive Fourieranalyse des jeweiligen Empfangssignals erforderlich. Hierbei lässt sich die Phaseninformation aus der im Wege der Fourier-Transformation bzw. Fourier-Analyse gewonnenen komplexen Darstellungsform der spektral vorliegenden Frequenzinformation der Ultraschallsignale ableiten. Eine andere Methode zur Bestimmung der Phasenlage eines Ultraschallsignals ist der unmittelbare Vergleich der Phasenlage zu einem bestimmten Zeitpunkt relativ zu einem Bezugszeitpunkt zum Beispiel einem Triggersignal.

Ein weiterer Vorteil der elektromagnetischen Ultraschallanregung ist die Erzeugung von transversal polarisierten Ultraschallwellen. Im Gegensatz zu Longitudinalwellen sind Transversalwellen in Flüssigkeiten nicht ausbreitungsfähig. Deshalb können mit diesem Wellentyp auch abgelöste Klebstoffverbindungen detektiert werden, die mit einer Flüssigkeit, wie zum Beispiel Regenwasser oder Treibstoff gefüllt sind. Tritt beispielsweise ein gegenüber dem Referenzsignal stark abgeschwächtes Empfangssignal auf, so lässt dies auf eine beschädigte Klebstoffschicht mit Flüssigkeitseinschluss schließen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: EMUS-Wandler zur Einschallung transversal polarisierter Ultraschallwellen in einen Testkörper und
- Fig. 2: Messanordnung zur Qualitätsüberprüfung einer Klebeschicht zwischen zwei Fügepartnern.

### Wege zur Ausführung der Erfindung, gewerbliche Verwendbarkeit

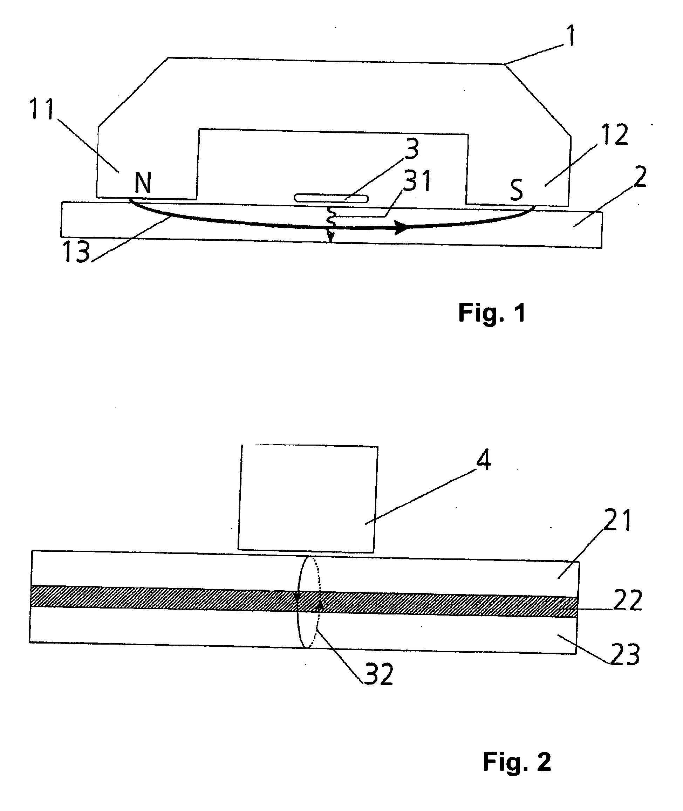

In Figur 1 ist ein EMUS-Wandler, bestehend aus einer Magnetisierungseinheit 1 und einem HF-Spulensystem 3, illustriert, der an der Oberfläche eines Testkörpers 2 aus ferromagnetischem Werkstoff angeordnet ist. In dem ferromagnetischen Werkstoff des Testkörpers 2 werden mit einem magnetostriktiv arbeitenden EMUS-Wandler 1 transversal polarisierte Ultraschallwellen 31 angeregt und detektiert. Die Ultraschallwandlung zwischen Wandler und Testkörper 2 erfolgt ohne mechanischen Kontakt also berührungsfrei. Die Magnetisierungseinheit 1 mit einem magnetischen Nordpol 11 und einem magnetischen Südpol 12 erzeugt oberflächennah, in dem Wandler zugewandten Bereich des Testkörpers 2 ein parallel zur Oberfläche orientiertes Magnetfeld 13. Zur Magnetisierung können Permanentmagnete oder Elektromagnete, die mit Gleichstrom oder mit niederfrequentem Wechselstrom betrieben werden, eingesetzt werden. Das HF-Spulensystem kann aus einer oder mehreren Spulen bestehen.

Im Sendefall wird die HF-Spule 3 mit einem leistungsstarken HF-Burst-Signal beaufschlagt. Dadurch wird ein hochfrequentes elektromagnetisches Feld erzeugt, das das parallel zur Testkörperoberfläche ausgerichtete Feld 13 der Magnetisierungseinrichtung moduliert. Aufgrund der Magnetostriktion in dem ferromagnetischen Werkstoff kommt es durch die Modulation zu oszillierenden Kräften im oberflächennahen Bereich der Testkörpers 2, die als Quellen für Ultraschallsignale dienen. Im Empfangsfall laufen die reziproken Vorgänge ab. Ist der Testkörper ein geschichtetes System aus Fügepartner-Klebeschicht-Fügepartner, wobei der dem Wandler zugewandte Fügepartner aus einem ferromagnetischen Werkstoff besteht, können in diesem System Dickenresonanzen innerhalb des Schichtsystems angeregt und detektiert werden, wie dies in Fig. 2 illustriert ist. Mit dem Bezugszeichen 4 ist ein EMUS-Wandler schematisiert dargestellt, der kontaktfrei gegenüber der Oberfläche eines Schichtverbundes angeordnet ist, der sich aus einem ferromagnetischen ersten Fügepartner 21, einer Klebeschicht 22 und einem nicht notwendigerweise aus ferromagnetischen Material bestehenden zweiten Fügepartner 23 zusammensetzt.

Die Anregung derartiger Dickenresonanzen 32 innerhalb des Schichtverbundes setzt voraus, dass entweder ein breitbandiges Anregungssignal, also ein Anregungsimpuls genutzt wird, und das Empfangssignal spektral analysiert wird, oder das Anregungssignal in der Frequenz durchgestimmt wird.

Zur Qualitätsüberprüfung des Schichtverbundes wird als Untersuchungskriterium die Phasenlage der detektierten Ultraschallwellen bzw. der aus den innerhalb des Schichtverbundes reflektierten Ultraschallwellen generierten Ultraschallsignale herangezogen. Für eine Phasenanalyse der Ultraschallsignale bedarf es Referenzphaseninformationen, die anhand von Referenzmessungen an einem Referenzschichtsystem gewonnen worden sind. Hierbei werden die Phasenlagen der Empfangsultraschallsignale relativ zu einem vorgebbaren Triggerpunkt bestimmt, bspw. relativ zum Sendezeitpunkt oder einem anderen Zeitpunkt, und mit entsprechenden Referenzwerten verglichen. Von besonderem Interesse sind die Phasenlagen der im Resonanzfall auftretenden Ultraschallsignale, also in jenen Fällen, in denen der jeweilige Signalpegel maximale Werte annimmt, zumal gerade jene Signale einen besonders großen Signal-Rauschabstand aufweisen und somit besonders zuverlässige Messwerte darstellen.

Die Phase der Ultraschallsignale eignet sich in besonders bevorzugter Weise für die Untersuchung der Qualität der Klebeschicht, zumal sich bereits geringste Degradationen in der Klebeschicht auf die Phasenlage der Ultraschallwellen auszuwirken vermag.

Da der eingesetzte Ultraschallwandler keinen mechanischen Kontakt zu dem zu untersuchenden Schichtverbund hat, sind die in Reflexion bzw. in Rückstreuung gemessenen Resonanzfrequenzen ausschließlich von den elastischen Eigenschaften und geometrischen Abmessungen der Fügepartner und der Klebeschicht abhängig. Dadurch ist eine genauere Analyse der Klebeschicht bzw. - naht im Vergleich zum Stand der Technik möglich. Außerdem wird durch die Koppelmittelfreiheit die praktische Prüfdurchführung deutlich vereinfacht, da nicht auf konstante Ankoppelbedingungen, wie bspw. Anwesenheit deines Koppelmittels, Koppelspaltdicke, etc., geachtet werden muss. Eine automatisierte Prüfung von Komponenten wird dadurch erleichtert. Zudem werden die Oberflächen des zu prüfenden Schichtverbundes nicht mit Koppelmittel verunreinigt.

### Bezugszeichenliste

- 1: Magnetisierungseinheit
- 11: Magnetischer Nordpol
- 12: Magnetischer Südpol
- 13: Magnetfeld
- 2: Testkörper
- 21: Wandler zugewandter Fügepartner
- 22: Klebeschicht
- 23: Wandler abgewandter Fügepartner
- 3: HF-Spulensystem
- 31: Senkrecht zur Oberfläche sich ausbreitende, transversal polarisierte Ultraschallwelle
- 32: Ultraschalldickenresonanz

## Patentansprüche

1. Verfahren zur Qualitätsprüfung wenigstens einer Klebverbindung, die in Form einer Haftvermittlerschicht in einem Schichtverbund zwischen wenigstens zwei flächig ausgebildeten Fügepartnern, von denen wenigstens ein Fügepartner ferromagnetische Materialanteile enthält, eingebracht ist, bei dem Ultraschallwellen über die Oberfläche eines Fügepartners in den Schichtverbund eingekoppelt, an der Haftvermittlerschicht sowie an der der Haftvermittlerschicht abgewandten Oberfläche des anderen Fügepartners wenigstens zum Teil zurückgestreut werden und die zurückgestreuten Ultraschallwellenanteile in Form von Ultraschallsignale detektiert und die dabei gewonnenen Ultraschallsignale der Qualitätsprüfung zugrunde gelegt werden,
**dadurch gekennzeichnet, dass** die Einkopplung sowie die Detektion der Ultraschallwellen über den die ferromagnetischen Materialanteile enthaltenden Fügepartner mittels eines EMUS-Wandlers erfolgt,
dass die Einkopplung der Ultraschallwellen in den aus der wenigstens einen Haftvermittlerschicht und den wenigstens zwei Fügepartnern bestehenden Schichtverbund derart durchgeführt wird, dass der EMUS-Wandler entweder mit einem breitbandigen Anregungsimpuls oder mit Anregungssignalen, die in der Frequenz durchgestimmt werden, zur Anregung von Dickenresonanzen innerhalb des Schichtverbundes beaufschlagt wird, und
dass aus den detektierten Ultraschallsignalen die Phasenlage der Ultraschallsignale ermittelt und der Qualitätsprüfung zugrunde gelegt wird.

2. Verfahren nach Anspruch 1,
**dadurch gekennzeichnet, dass** zur Ermittlung der Phasenlage die detektierten Ultraschallsignale einer Fourier-Transformation und/oder einer diskreten frequenzselektiven Fourieranalyse unterzogen werden.

3. Verfahren nach Anspruch 1,
**dadurch gekennzeichnet, dass** die Phasenlagen von Ultraschallsignalen bestimmt werden, die im Resonanzfall auftreten und mit Phasenlagen von entsprechenden Referenzsignalen verglichen werden.

4. Verfahren nach einem der Ansprüche 1 bis 3,
**dadurch gekennzeichnet, dass** zur Ultraschallwelleneinkopplung ein parallel zur Oberfläche des die ferromagnetischen Materialanteile enthaltenden Fügepartners orientiertes Magnetfeld in den Fügepartner eingeleitet wird, das mit einem hochfrequenten, elektromagnetischen Wechselfeld überlagert wird, so dass zumindest anteilig transversale Ultraschallwellen senkrecht zur Oberfläche des die ferromagnetischen Materialanteile enthaltenden Fügepartners generiert werden.

5. Verfahren nach einem der Ansprüche 1 bis 4,
**dadurch gekennzeichnet, dass** der EMUS-Wandler kontaktfrei relativ zu dem die ferromagnetischen Materialanteile enthaltenden Fügepartner gelagert wird.

6. Verfahren nach einem der Ansprüche 1 bis 5,
**dadurch gekennzeichnet, dass** zur Qualitätsprüfung die ermittelte Phasenlage mit wenigsten einem Referenzwert verglichen wird.

## Claims

1. A method for testing the quality of at least one adhesive joint that is produced in the form of a bonding agent layer in a laminar structure between at least two planar mating parts, of which at least one mating part contains ferromagnetic material components, in which ultrasonic waves are coupled into the laminate structure over the surface of one mating part, are at least partially back-scattered at the bonding agent layer and at the surface of the bonding agent layer facing the other mating part, and the back-scattered ultrasonic wave components are detected in the form of ultrasonic signals and the ultrasonic signals thereby obtained are used as the basis for quality testing,
**characterized in that** the incoupling and the detection of the ultrasonic waves takes place over the mating part which contains the ferromagnetic material component, by means of an EMUS transducer,
that the incoupling of the ultrasonic waves into the laminate structure consisting of the at least one bonding agent layer and the at least two mating parts is carried out in accordance with thickness resonances, which can be excited within the laminate structure in such a manner that the EMUS transducer is subjected either to a broadband excitation pulse or to variable frequency excitation signals, and
that the phase angle of the ultrasonic signals is determined from the detected ultrasonic signals and is used as the basis for quality testing.

2. The method according to claim 1,
**characterized in that** to determine the phase angle, the detected ultrasonic signals are subjected to a Fourier transform and/or a discrete frequency-selective Fourier analysis.

3. The method according to claim 1,
**characterized in that** the phase angles of ultrasonic signals which occur in the resonance mode are determined and compared with phase angles of corresponding reference signals.

4. The method according to any one of claims 1 to 3,
**characterized in that** in order to couple in the ultrasonic waves, a magnetic field, oriented parallel to the surface of the mating part containing the ferromagnetic material components, is introduced into the mating part, said field being superimposed with a high-frequency, electromagnetic alternating field such that ultrasonic waves, of which at least some components are transverse, are generated perpendicular to the surface of the mating part containing the ferromagnetic material components.

5. The method according to any one of claims 1 to 4,
**characterized in that** the EMUS transducer is mounted in a contactless manner relative to the mating parts containing the ferromagnetic material components.

6. The method according to any one of claims 1 to 5,
**characterized in that** in order to perform the quality testing, the phase angle obtained is compared with at least one reference value.

## Revendications

1. Procédé de contrôle de qualité pour au moins un joint collé qui est mis en place sous la forme d'une couche d'agent adhésif dans une stratification entre au moins deux partenaires d'assemblage constitués en nappe dont au moins un partenaire d'assemblage contient des parties de matériau métalliques, des ondes ultrasonores étant injectées par la surface d'un partenaire d'assemblage dans la strtification, sur la couche d'agent adhésif ainsi que redispersées au moins en partie sur la surface opposée à la couche d'agent adhésif de l'autre partenaire d'assemblage et les parties d'ondes ultrasonores redispersées étant détectées sous la forme de signaux à ultrasons et les signaux à ultrasons acquis à cet effet étant pris pour base du contrôle de qualité,
**caractérisé en ce que** l'injection ainsi que la détection des ondes ultrasonores sur les partenaires d'assemblage contenant des parties de matériau ferromagnétiques a lieu au moyen d'un transducteur à ultrasons électromagnétique,
**en ce que** l'injection des ondes ultrasonores dans la stratification composée d'au moins une couche d'agent adhésif et d'au moins deux partenaires d'assemblage est effectuée de telle sorte que le transducteur à ultrasons électromagnétique est sollicité, soit avec une impulsion d'excitation à bande large soit avec des signaux d'excitation qui sont ajustés dans la fréquence, pour excitation des résonances en épaisseur à l'intérieur de la stratification, et
**en ce que** la position de phase des signaux à ultrasons est déterminée à partir des signaux à ultrasons détectés et est prise pour base du contrôle de qualité.

2. Procédé selon la revendication 1
**caractérisé en ce que** pour déterminer la position de phase, les signaux à ultrasons détectés sont soumis à une transformation de Fourier et/ou à une analyse de Fourier discrète sélective en fréquence.

3. Procédé selon la revendication 1
**caractérisé en ce que** l'on détermine les positions de phase des signaux à ultrasons qui se produisent en cas de résonance et que celles ci sont comparées aux positions de phase des signaux de référence correspondants.

4. Procédé selon une quelconque des revendications 1 à 3
**caractérisé en ce que** pour injecter des ondes ultrasonores, on introduit dans les partenaires d'assemblage un champ magnétique orienté parallèlement à la surface du partenaire d'assemblage contenant des parties de matériau ferromagnétiques qui est surmonté d'un champ alternatif électromagnétique à haute fréquence de sorte qu'au moins proportionnellement des ondes ultrasonores transversales sont générées perpendiculairement à la surface du partenaire d'assemblage contenant des parties de matériau ferromagnétiques .

5. Procédé selon une quelconques des revendications 1 à 4
**caractérisé en ce que** le transducteur à ultrasons électromagnétique est monté sans contact par rapport au partenaire d'assemblage contenant des parties de matériau ferromagnétiques.

6. Procédé selon une quelconques des revedications 1 à 5
**caractérisé en ce que** pour le contrôle de qualité, la positon de phase obtenue est comparée au moins à une valeur de référence.
